# EUROPÄISCHE PATENTSCHRIFT

(11) **EP 2 540 079 B1**
(45) Veröffentlichungstag und Bekanntmachung des Hinweises auf die Patenterteilung: **26.11.2014**
(21) Anmeldenummer: 11710677.3
(22) Anmeldetag: 25.02.2011
(51) Int. Cl.: H04N 5/775, B64D 11/06, B60N 2/48, B64D 11/00, B60R 11/00, B60R 11/02

(54) **SITZVORRICHTUNG MIT SITZBILDSCHIRMEINHEIT**
SEAT COMPRISING A SEAT SCREEN UNIT
DISPOSITIF DE SIÈGE DOTÉ D'UNE UNITÉ ÉCRAN DE SIÈGE

(30) Priorität: 27.02.2010 DE 102010009626
(43) Veröffentlichungstag der Anmeldung: 02.01.2013
(73) Patentinhaber: Recaro Aircraft Seating GmbH & Co. KG, 74523 Schwäbisch Hall (DE)
(72) Erfinder: KRÄMER, Marco, 74549 Wolpertshausen (DE)
(74) Vertreter: Daub, Thomas
(86) Internationale Anmeldenummer: PCT/EP2011/000918
(87) Internationale Veröffentlichungsnummer: WO 2011/104026

(56) Entgegenhaltungen:
- WO-A1-2008/141217
- FR-A1- 2 875 455
- US-A1- 2004 086 259
- US-A1- 2004 145 684

## Beschreibung

### Stand der Technik

Die Erfindung geht aus von einer Sitzvorrichtung, insbesondere einer Fluggastsitzvorrichtung nach dem Oberbegriff des Patentanspruchs 1.

Es sind bereits Sitzvorrichtungen mit einem in eine Rückenlehne integrierten Bildschirm bekannt. Der Bildschirm ist in dieser Anordnung für einen hinter der Sitzvorrichtung sitzenden Passagier zu Unterhaltungs- oder Informationszwecken vorgesehen. Die Rückenlehne weist eine Aussparung auf, in der der Bildschirm mit Hilfe von Befestigungsmitteln gehalten wird. Ein Videosignal wird über ein Videokabel übertragen, das an einem Bildschirmgehäuse angeschlossen ist, wobei das Bildschirmsignal mit einem im Bildschirmgehäuse befindlichen Bildwandler zur Darstellung auf dem Bildschirm in bekannter Weise aufbereitet wird.

Der Erfindung liegt insbesondere die Aufgabe zugrunde, das Gewicht der Sitzvorrichtung durch Materialeinsparung bei gleich bleibendem Sitzkomfort zu verringern. Diese Aufgabe wird durch eine Sitzvorrichtung gemäß dem Patentanspruch 1 gelöst. Weitere vorteilhafte Ausführungen der Erfindung können den Unteransprüchen entnommen werden.

US 2004/0145684 A1 offenbart ein Sitzanzeigesystem gemäß den Oberbegriff des Patentanspruchs 1.

### Vorteile der Erfindung

Die Erfindung geht aus von einer Sitzvorrichtung mit einer Rückenlehneneinheit, die wenigstens eine Sitzbildschirmeinheit aufweist, die dazu vorgesehen ist, in einem betriebsbereiten Zustand Ausgangssignale einer Bildwandlereinheit anzuzeigen, wobei die Ausgangssignale von einer Signalübertragungseinheit zwischen der Bildwandlereinheit und der Sitzbildschirmeinheit übertragen werden. Unter einer "Rückenlehneneinheit" soll dabei in diesem Zusammenhang insbesondere eine Einheit einer Sitzvorrichtung verstanden werden, die zumindest eine Rückenlehne und eine rückwärtige Rückenlehnenabdeckung aufweist. Unter einer "Sitzbildschirmeinheit" soll in diesem Zusammenhang insbesondere eine Einheit verstanden werden, die einen Bildschirm und einen zumindest teilweise den Bildschirm umschließenden Bildschirmrahmen aufweist, wobei der Bildschirm dazu vorgesehen ist, spezifische Ausgangssignale einer korrespondierenden Bildwandlereinheit anzuzeigen. Vorzugsweise kann es sich bei dem Bildschirm um einen Flüssigkristallbildschirm handeln. Unter "vorgesehen" soll dabei insbesondere speziell ausgestattet und/oder ausgelegt verstanden werden. Unter einer "Bildwandlereinheit" soll in diesem Zusammenhang insbesondere eine Anordnung elektronischer Bauteile verstanden werden, die dazu vorgesehen ist, ein standardisiertes Eingangssignal mit einer Signalwandlungseinheit zu einem Ausgangssignal zu wandeln und eine Versorgungsspannung zu erzeugen. Darüber hinaus kann die Bildwandlereinheit wenigstens eine Kühleinheit aufweisen. Unter einem "standardisierten Eingangssignal" soll insbesondere ein analoges oder digitales Signal verstanden werden, das in einem externen Multimediagerät oder Computer, bevorzugt in einem in bekannter Weise standardisierten Signalformat, erzeugt wird. Unter einem "spezifischen Ausgangssignal" soll in diesem Zusammenhang insbesondere ein spezifisch auf die Sitzbildschirmeinheit und die Bildwandlereinheit angepasstes Signal verstanden werden, das dazu vorgesehen ist, Informationen zwischen der Bildwandlereinheit und der Sitzbildschirmeinheit zu übertragen. Besonders bevorzugt kann das Ausgangssignal Bildinformationen von der Bildwandlereinheit zur Sitzbildschirmeinheit übertragen. Unter einer "Signalübertragungseinheit" soll in diesem Zusammenhang insbesondere ein elektrisches und/oder optisches Verbindungselement verstanden werden, das dazu vorgesehen ist, Signale zwischen der Bildwandlereinheit und der Sitzbildschirmeinheit zu übertragen. Bevorzugt kann es sich bei der Signalübertragungseinheit um ein elektrisches Kabel, besonders bevorzugt um eine elektrische Leiterbahn handeln.

Es wird vorgeschlagen, dass die Sitzbildschirmeinheit zumindest eine Ausgangsschnittstelle aufweist, die dazu vorgesehen ist, Signale zwischen der Bildwandlereinheit und der Sitzbildschirmeinheit zu übertragen, und dass die Bildwandlereinheit außerhalb der Sitzbildschirmeinheit angeordnet ist. Unter einer "Ausgangsschnittstelle" soll dabei insbesondere eine elektrische Schnittstelle verstanden werden, die von dem Bildschirm durch den Bildschirmrahmen hindurch nach außen führt. Dadurch kann die Bildwandlereinheit vorteilhaft unabhängig von der Sitzbildschirmeinheit angeordnet werden. Bevorzugt kann die Bildwandlereinheit an Stellen angeordnet werden, an denen vorteilhaft nur geringe, durch eine Beschleunigung der Bildwandlereinheit erzeugte Drehmomente an der Sitzvorrichtung angreifen. Dadurch können vorteilhaft Material- und Gewichtseinsparungen sowie geringere Abmessungen und einfachere Konstruktionen erreicht werden.

In einer weiteren Ausgestaltung der Erfindung wird vorgeschlagen, dass die Sitzvorrichtung eine Aufnahmeeinheit aufweist, die dazu vorgesehen ist, die Sitzbildschirmeinheit aufzunehmen, so dass eine Oberfläche der Sitzbildschirmeinheit in einer Verstauposition eine geschlossene Kontur mit einer rückseitigen Oberfläche der Rückenlehnenabdeckung bildet. Dadurch kann in der Verstauposition vorteilhaft eine Sicherheit für einen hinter der Sitzvorrichtung sitzenden Passagier erhöht und eine Verletzungsgefahr verringert werden. Vorzugsweise ist die Oberfläche der Sitzbildschirmeinheit dem hinter der Sitzvorrichtung sitzenden Passagier zugewandt. Bevorzugt kann die Oberfläche mit der Rückenlehnenabdeckung abschließen.

Ferner wird vorgeschlagen, dass die Rückenlehneneinheit eine Aufnahmeeinheit aufweist, die dazu vorgesehen ist, die Bildwandlereinheit aufzunehmen. Dadurch kann ein besonders einfacher und schneller gemeinsamer Austausch der Rückenlehneneinheit und der Bildwandlereinheit erfolgen.

In einer weiteren vorteilhaften Ausgestaltung weist die Sitzvorrichtung eine Neigungsverstelleinheit zu einer verstellbaren Ankopplung der Sitzbildschirmeinheit an die Rückenlehneneinheit auf, wodurch einem hinter der Sitzvorrichtung sitzenden Passagier eine individuelle Einstellung eines Betrachtungswinkels zur Sitzbildschirmeinheit durch eine Drehung der Oberfläche um eine Achse ermöglicht werden kann. Besonders bevorzugt kann die Ausrichtung um eine Achse erfolgen, die im Wesentlichen senkrecht zu einer Achse liegt, die in Sitzrichtung ausgerichtet ist. Unter einer "Sitzrichtung" soll in diesem Zusammenhang eine Richtung verstanden werden, die parallel zu einem Boden und senkrecht zu einer vorderen Kante der Sitzvorrichtung ausgerichtet ist und von der Rückenlehneneinheit wegführt.

Weist die Sitzvorrichtung zumindest ein elektromagnetisches Abschirmungselement auf, das dazu vorgesehen ist, elektromagnetische Strahlung wesentlich zu dämpfen, kann eine ungewollte Abstrahlung von elektromagnetischen Wellen und/oder eine Einwirkung durch von außen einwirkende elektromagnetische Wellen vorteilhaft vermieden werden. Unter elektromagnetischer Strahlung soll in diesem Zusammenhang insbesondere elektromagnetische Strahlung zumindest im Frequenzbereich zwischen 10 MHz und 10 GHz verstanden werden. Unter "wesentlicher Dämpfung" soll in diesem Zusammenhang insbesondere eine Dämpfung von mindestens 20 dB bei einer Frequenz von 100 MHz in einer Amplitude der elektromagnetischen Strahlung verstanden werden. Bevorzugt kann das elektromagnetische Abschirmungselement in einer unmittelbaren Nähe der Signalübertragungseinheit angeordnet sein, wodurch das Signal der Bildwandlereinheit besonders störungsfrei übertragen werden kann.

Ferner wird vorgeschlagen, dass die Sitzbildschirmeinheit einen Flüssigkeitskristallbildschirm aufweist, wodurch eine besonders leichte und flache Bauweise erreicht werden kann. Besonders bevorzugt ist der Flüssigkeitskristallbildschirm als TFT-Bildschirm (TFT: Thin-Film Transistor) ausgebildet.

Es wird des Weiteren ein Sitzanzeigesystem vorgeschlagen, das mit einer Sitzvorrichtung, mit einer Bildwandlereinheit, wobei die Bildwandlereinheit dazu vorgesehen ist, Ausgangssignale zu einer Anzeige mit der Sitzbildschirmeinheit der Rückenlehneneinheit zu erzeugen, und mit einer Signalübertragungseinheit ausgestattet ist, die dazu vorgesehen ist, die von der Bildwandlereinheit erzeugten Signale zur Sitzbildschirmeinheit zu übertragen. Dadurch können vorteilhaft Material- und Gewichtseinsparungen sowie geringere Abmessungen und einfachere Konstruktionen der Sitzvorrichtung erreicht werden.

Umfasst die Signalübertragungseinheit des Sitzanzeigesystems zumindest eine in die Sitzvorrichtung integrierte elektrische Leiterbahn, kann die Signalübertragungseinheit besonders einfach gegen äußere mechanische und/oder elektromagnetische Einflüsse geschützt werden. Bevorzugt kann die Leiterbahn aufgedampft, besonders bevorzugt aufgespritzt sein. Dem Fachmann sind dazu geeignete Methoden bekannt.

Ferner wird vorgeschlagen, dass das Sitzanzeigesystem mit einem lösbaren elektrischen Verbindungselement ausgestattet ist, das in einem betriebsbereiten Zustand zwischen der Bildwandlereinheit und einer Videosignalübertragungseinheit angeordnet ist. Unter einer "Videosignalübertragungseinheit" soll dabei insbesondere eine Einheit verstanden werden, die von einem Multimediagerät und/oder von einem Computer Videosignale zur Bildwandlereinheit überträgt. Durch das lösbare elektrische Verbindungselement kann die Rückenlehneneinheit auf besonders einfache und schnelle Weise von der Sitzvorrichtung getrennt und ausgetauscht werden.

In einer weiteren Ausgestaltung wird vorgeschlagen, dass die Bildwandlereinheit einen Bildwandler aufweist, der dazu vorgesehen ist, ein Eingangssignal der Videosignalübertragungseinheit zu einem Ausgangssignal zu wandeln, welches spezifisch auf die Sitzbildschirmeinheit abgestimmt ist. Dadurch kann das Ausgangssignal ohne weitere Nachbearbeitung von der Sitzbildschirmeinheit angezeigt werden, wodurch eine Verwendung eines Bildwandlers innerhalb der Sitzbildschirmeinheit vorteilhaft vermieden werden kann. Vorteilhaft kann die Bildwandlereinheit zumindest ein Kühlelement aufweisen, das dazu vorgesehen ist, entstandene Wärme der Bildwandlereinheit abzuführen, wodurch ein besonders kompakter Aufbau erzielt werden kann.

Es wird des Weiteren vorgeschlagen, dass die Bildwandlereinheit zumindest einen Spannungswandler aufweist, der dazu vorgesehen ist, die Sitzbildschirmeinheit in einem betriebsbereiten Zustand mit zumindest einer elektrischen Versorgungsspannung zu versorgen. Dadurch kann eine Energieversorgung der Sitzbildschirmeinheit besonders einfach und störungsfrei erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen schematisch:
- Fig. 1: einen Sitz mit einem Sitzanzeigesystem,
- Fig. 2: einen Querschnitt durch den Sitz gemäß Fig. 1 und
- Fig. 3: eine Detailansicht einer Rückenlehneneinheit des Sitzanzeigesystems gemäß Fig. 1.

### Beschreibung des Ausführungsbeispiels

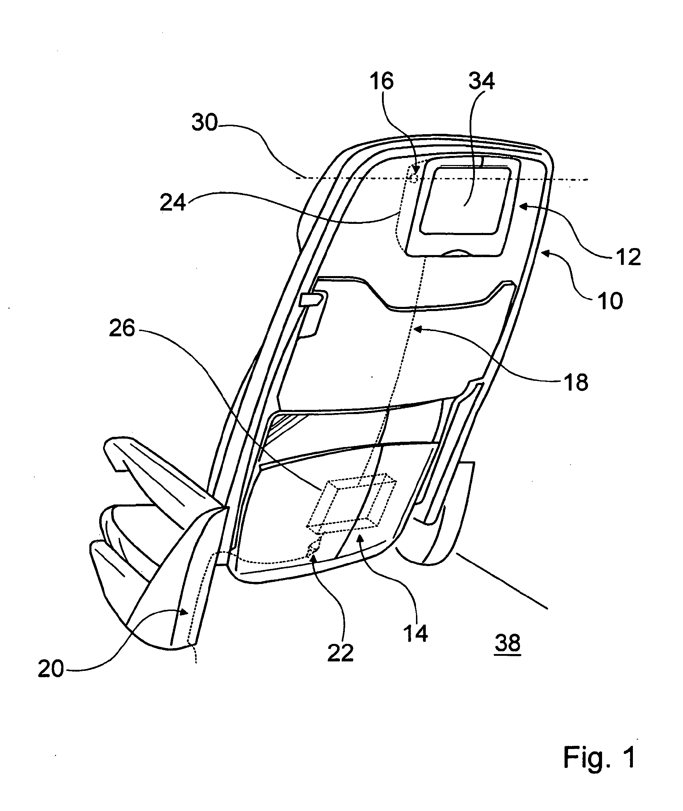

Figur 1 zeigt einen erfindungsgemäßen Sitz mit einem Sitzanzeigesystem in einer perspektivischen Ansicht. Der Sitz ist auf einem Boden 38 einer Flugzeugkabine in bekannter und hier nicht näher beschriebener Weise befestigt. Das Sitzanzeigesystem umfasst eine Sitzvorrichtung mit einer in Bezug auf eine Sitzrichtung 28 rückwärtig an der Sitzvorrichtung angebrachten Rückenlehneneinheit 10, die eine Sitzbildschirmeinheit 12 aufweist. Unter der "Sitzrichtung" 28 soll in diesem Zusammenhang eine Richtung verstanden werden, die parallel zum Boden 38 und senkrecht zu einer vorderen Kante 33 der Sitzvorrichtung ausgerichtet ist und von der Rückenlehneneinheit 10 wegführt. Die Sitzrichtung 28 entspricht typischerweise einer Flugrichtung. In dieser Beschreibung beziehen sich die Begriffe "vor", "hinten", "rückwärtig", "vorne", "Frontseite", "Vorderseite", "Rückseite" usw. auf die Sitzrichtung 28. Ferner beziehen sich die Begriffe "oben", "unten", "oberhalb", "unterhalb" usw. auf eine vertikale Richtung die senkrecht zum Boden 38 ausgerichtet ist und von diesem ausgeht. Obwohl hier nicht dargestellt, können mehrere dieser Sitze in einer Reihe angeordnet sein, und mehrere Reihen von Sitzen können hintereinander in bekannter Weise in Sitzrichtung 28 angeordnet sein.

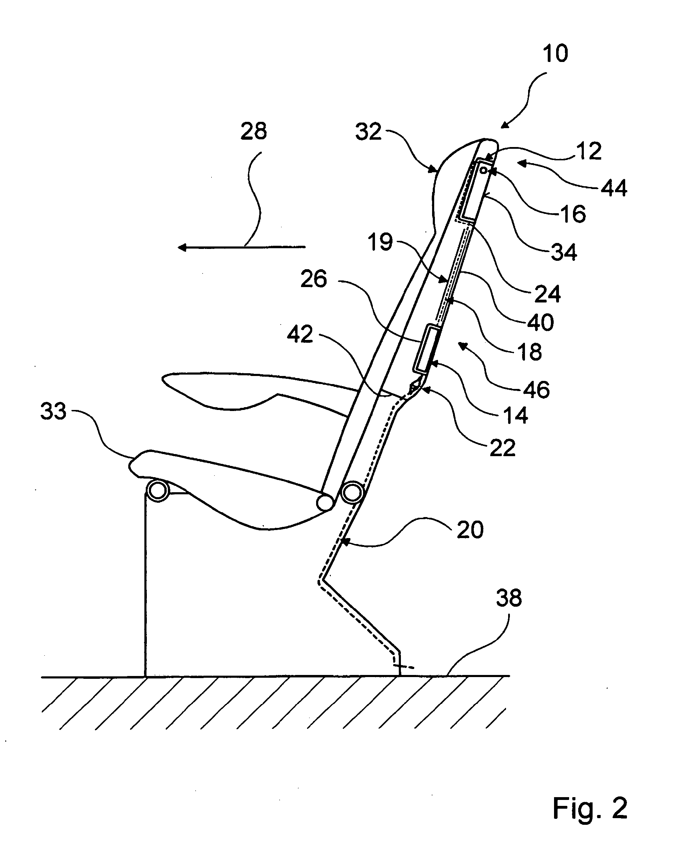

Ferner umfasst das Sitzanzeigesystem eine Bildwandlereinheit 14, eine Neigungsverstelleinheit 16 sowie eine Signalübertragungseinheit 18. Auf einer der Sitzrichtung 28 zugewandten Seite ist die Rückenlehneneinheit 10 zu einer Aufnahme einer Polstereinheit 32 (Fig. 2) vorgesehen.

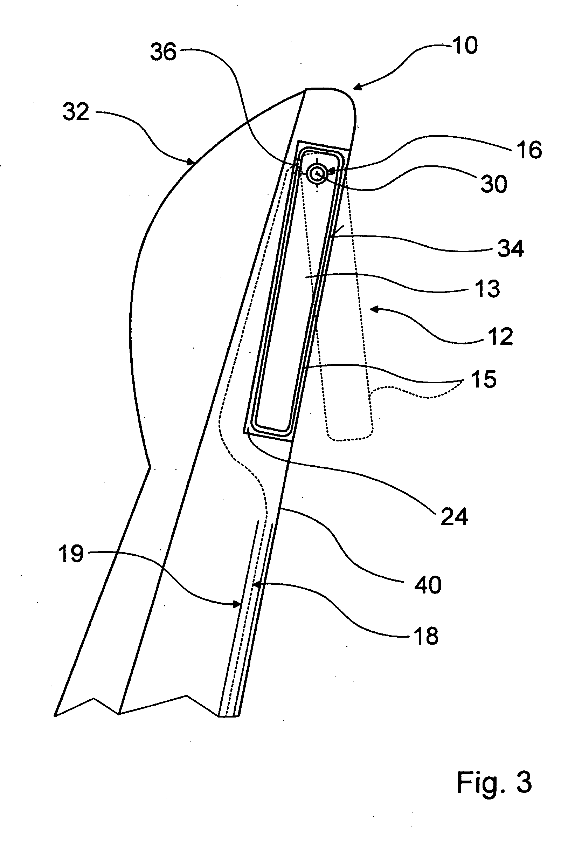

Die Rückenlehneneinheit 10 ist an der Sitzvorrichtung rückwärtig durch der Übersichtlichkeit halber nicht dargestellte Befestigungsmittel lösbar befestigt. An einer Trennstelle 42 schließt die Rückenlehneneinheit 10 mit der Sitzvorrichtung bündig ab. Ferner weist die Rückenlehneneinheit 10 in einem oberen Bereich 44 eine Aufnahmeeinheit 24 auf, die dazu vorgesehen ist, die Sitzbildschirmeinheit 12 aufzunehmen, so dass eine Oberfläche 34 der Sitzbildschirmeinheit 12 in einer Verstauposition eine geschlossene Kontur mit einer rückseitigen Oberfläche der Rückenlehneneinheit 10 bildet. In der Fig. 3 ist die Sitzbildschirmeinheit 12 in der Verstauposition durch eine durchgezogene Linie dargestellt. Die Aufnahmeeinheit 24 ist in einer an der Rückenlehneneinheit 10 befestigten Rückenlehnenabdeckung 40 als rückwärtig geöffnete Ausnehmung ausgebildet. Die Rückenlehnenabdeckung 40 deckt die Rückenlehneneinheit 10 rückwärtig ab und schützt die in ihr enthaltenen Bauteile vor äußeren Einflüssen.

Des Weiteren weist die Sitzvorrichtung eine Neigungsverstelleinheit 16 zu einer verstellbaren Ankopplung der Sitzbildschirmeinheit 12 an die Rückenlehneneinheit 10 auf. Die Neigungsverstelleinheit 16 ist als ein nicht näher dargestelltes Drehgelenk ausgebildet und ermöglicht eine Schwenkung der Sitzbildschirmeinheit 12 aus der Verstauposition in eine Betrachtungsposition um eine zu einer Sitzrichtung 28 senkrechte und zum Boden 38 parallele Drehachse 30, um den Betrachtungswinkel der Oberfläche 34 der Sitzbildschirmeinheit 12 für einen hinter der Sitzvorrichtung sitzenden Passagier individuell einstellen zu können. In der Fig. 3 zeigt eine gestrichelte Linie die Sitzbildschirmeinheit 12 in der Betrachtungsposition. Befindet sich die Sitzbildschirmeinheit 12 in der Verstauposition, bildet die Oberfläche 34 der Sitzbildschirmeinheit 12 mit der rückseitigen Oberfläche der Rückenlehneneinheit 10 eine geschlossene Kontur (Fig. 3). In der Verstauposition ragen daher keine Teile der Sitzbildschirmeinheit 12 in den Raum hinter der Sitzvorrichtung, wodurch die Sicherheit für den rückwärtig sitzenden Passagier erhöht wird.

Ferner weist die Rückenlehneneinheit 10 eine Aufnahmeeinheit 26 auf, die dazu vorgesehen ist, die Bildwandlereinheit 14 aufzunehmen (Fig. 1, Fig. 2). Die Aufnahmeeinheit 26 ist durch ein Kunststoffgehäuse gebildet, welches vor der Rückenlehnenabdeckung 40 angeordnet ist und die Bildwandlereinheit 14 im montierten Zustand umschließt. Das Kunststoffgehäuse weist im oberen Bereich eine erste Öffnung, durch die die Signalübertragungseinheit 18 geführt ist, und im unteren Bereich eine zweite Öffnung auf, an der ein lösbares Verbindungselement 22 des Sitzanzeigesystems zur Verbindung mit einer Videosignalübertragungseinheit 20 angeordnet ist.

Die Sitzbildschirmeinheit 12 weist einen Flüssigkeitskristallbildschirm 13 auf, der als TFT-Bildschirm ausgebildet ist, der von einem Bildschirmrahmen 15 zumindest teilweise umschlossen ist. Die Sitzbildschirmeinheit 12 ist in die Aufnahmeeinheit 24 mit einem Freiraum zwischen dem Bildschirmrahmen 15 und der Aufnahmeeinheit 24 eingebaut (Fig. 3), der dazu vorgesehen ist, ein reibungs- und verschleißfreies Schwenken der Sitzbildschirmeinheit 12 zwischen der Verstauposition und der Betrachtungsposition zu ermöglichen.

Der Bildschirmrahmen 15 der Sitzbildschirmeinheit 12 weist eine Ausgangsschnittstelle 36 auf, die eine elektrische Steckverbindung umfasst. Die Ausgangsschnittstelle 36 ist dazu vorgesehen, Signale zwischen der Bildwandlereinheit 14 und der Sitzbildschirmeinheit 12 zu übertragen. Eine Außenseite des Bildschirmrahmens 15 weist eine Buchse zur Aufnahme eines Steckers der elektrischen Steckverbindung auf. An der Buchse ist in einem betriebsbereiten Zustand die Signalübertragungseinheit 18 angeschlossen (Fig. 3).

Ferner weist die Sitzvorrichtung in einem Mittenbereich der Rückenlehneneinheit 10 ein elektromagnetisches Abschirmungselement 19 auf, das dazu vorgesehen ist, elektromagnetische Strahlungen bei einer Frequenz von 100 MHz um mehr als 60 dB zu dämpfen. Das elektromagnetische Abschirmungselement 19 ist als Leiterbahnabschirmung ausgebildet und weist eine Kupferfolie auf, die dazu vorgesehen ist, eine Wirkung einer von außen auftreffenden elektromagnetischen Strahlung zu verringern und eine Abstrahlung von elektromagnetischer Strahlung durch die Leiterbahn zu vermeiden (Fig. 2).

Das dargestellte Sitzanzeigesystem ist mit einer Sitzvorrichtung und einer Bildwandlereinheit 14 ausgestattet, die dazu vorgesehen ist, Ausgangssignale zur Anzeige mit der Sitzbildschirmeinheit 12 zu erzeugen. Die Bildwandlereinheit 14 ist in einem unteren Bereich 46 der Rückenlehneneinheit 10 in einer Aufnahmeeinheit 26 angeordnet (Fig. 2). Die Aufnahmeeinheit 26 ist an einem Rahmen der Rückenlehneneinheit 10 befestigt. Durch die Aufnahmeeinheit 26 ist die Bildwandlereinheit 14 vor äußeren Einflüssen vorteilhaft geschützt.

Die Bildwandlereinheit 14 weist einen Bildwandler auf, der dazu vorgesehen ist, ein Eingangssignal der Videosignalübertragungseinheit 20 zu einem Ausgangssignal zu wandeln, welches spezifisch auf die Sitzbildschirmeinheit 12 abgestimmt ist. Das Eingangssignal und das Ausgangssignal liegen in einem digitalen Format vor. Aus dem digitalen Eingangssignal wird das digitale Ausgangssignal berechnet, das die Sitzbildschirmeinheit 12 durch ein nicht näher erläutertes Multiplex-Verfahren anzeigt. Ein weiterer Bildwandler in der Sitzbildschirmeinheit 12 wird dadurch vorteilhaft vermieden.

Ferner weist die Bildwandlereinheit 14 zwei Spannungswandler auf, die dazu vorgesehen sind, zwei unterschiedliche Versorgungsspannungen für die Sitzbildschirmeinheit 12 zu erzeugen. Der erste Spannungswandler verringert eine Spannung von 28VDC einer externen Spannungsquelle auf 5VDC, um den Bildwandler zu versorgen. Der zweite Spannungswandler wandelt die Spannung der externen Spannungsquelle auf 630VAC zur Versorgung einer nicht näher beschriebenen Hintergrundbeleuchtung des TFT-Bildschirms um.

Des Weiteren ist das Sitzanzeigesystem mit einer Signalübertragungseinheit 18 ausgestattet, die dazu vorgesehen ist, die von der Bildwandlereinheit 14 erzeugten Signale zur Sitzbildschirmeinheit 12 zu übertragen. Die Signalübertragungseinheit 18 weist zwei in die Sitzvorrichtung integrierte elektrische Leiterbahnen und an jedem Ende jeweils eine Steckverbindung auf. Die Leiterbahnen sind mit der Bildwandlereinheit 14 und der Sitzbildschirmeinheit 12 verbunden und verlaufen in der Rückenlehneneinheit 10 an einer Innenseite der Rückenlehnenabdeckung 40. Die Leiterbahnen sind als aufgespritzte Schichten ausgebildet. Zur Verdeutlichung sind die Leiterbahnen mit einem kleinen Abstand zu der Rückenlehnenabdeckung 40 dargestellt (Fig. 2, Fig. 3). Die Leiterbahnen sind dazu vorgesehen, Signale mit Bildinformationen von der Bildwandlereinheit 14 zur Sitzbildschirmeinheit 12 und Benutzereingabeinformationen von der Sitzbildschirmeinheit 12 zur Bildwandlereinheit 14 zu übertragen (Fig. 1-3).

Das Sitzanzeigesystem weist ein lösbares Verbindungselement 22 auf, das in einem betriebsbereiten Zustand zwischen der Bildwandlereinheit 14 und einer Videosignalübertragungseinheit 20 angeordnet ist. Das lösbare Verbindungselement 22 ist als eine elektrische Steckverbindung ausgebildet, die eine lösbare Verbindung zwischen der Bildwandlereinheit 14 und der Videosignalübertragungseinheit 20 herstellt, wodurch sich die Rückenlehneneinheit 10 auf einfache und schnelle Weise von der Sitzvorrichtung entfernen und montieren lässt (Fig. 1, Fig. 2).

Die Videosignalübertragungseinheit 20, die dazu vorgesehen ist, von einer externen Videosignalquelle (nicht dargestellt) ein Videosignal zu übertragen sowie eine Versorgungsspannung bereitzustellen, besteht aus einem Kabel sowie aus einem Abschirmungselement gegen unerwünschte Ein- oder Abstrahlung elektromagnetischer Wellen.

### Bezugszeichen

- 10: Rückenlehneneinheit
- 12: Sitzbildschirmeinheit
- 13: Flüssigkeitskristallbildschirm
- 14: Bildwandlereinheit
- 15: Bildschirmrahmen
- 16: Neigungsverstelleinheit
- 18: Signalübertragungseinheit
- 19: Abschirmungselement
- 20: Videosignalübertragungseinheit
- 22: Verbindungselement
- 24: Aufnahmeeinheit
- 26: Aufnahmeeinheit
- 28: Sitzrichtung
- 30: Drehachse
- 32: Polstereinheit
- 33: Kante
- 34: Oberfläche
- 36: Ausgangsschnittstelle
- 38: Boden
- 40: Rückenlehnenabdeckung
- 42: Trennstelle
- 44: Bereich
- 46: Bereich

## Patentansprüche

1. Sitzanzeigesystem mit einer Sitzvorrichtung mit einer Rückenlehneneinheit (10), die wenigstens eine Sitzbildschirmeinheit (12) aufweist, die dazu vorgesehen ist, in einem betriebsbereiten Zustand Ausgangssignale einer Bildwandlereinheit (14) anzuzeigen, wobei die Ausgangssignale von einer Signalübertragungseinheit (18) zwischen der Bildwandlereinheit (14) und der Sitzbildschirmeinheit (12) übertragen werden, und die zumindest eine Ausgangsschnittstelle (36) aufweist, die dazu vorgesehen ist, Signale zwischen der Bildwandlereinheit (14) und der Sitzbildschirmeinheit (12) zu übertragen, und mit der Bildwandlereinheit (14), die dazu vorgesehen ist, Ausgangssignale zur Anzeige mit der Sitzbildschirmeinheit (12) zu erzeugen, und die außerhalb der Sitzbildschirmeinheit (12) angeordnet ist, und mit der Signalübertragungseinheit (18), die dazu vorgesehen ist, die von der Bildwandlereinheit (14) erzeugten Signale zur Sitzbildschirmeinheit (12) zu übertragen, **dadurch gekennzeichnet, dass** die Bildwandlereinheit (14) zumindest einen Spannungswandler aufweist, der dazu vorgesehen ist, zumindest eine Versorgungsspannung für die Sitzbildschirmeinheit (12) zu erzeugen.

2. Sitzanzeigesystem nach Anspruch 1, **dadurch gekennzeichnet, dass** die Signalübertragungseinheit (18) zumindest eine in die Sitzvorrichtung integrierte elektrische Leiterbahn umfasst.

3. Sitzanzeigesystem nach Anspruch 1 oder 2, **gekennzeichnet durch** ein lösbares Verbindungselement (22), das in einem betriebsbereiten Zustand zwischen der Bildwandlereinheit (14) und einer Videosignalübertragungseinheit (20) angeordnet ist.

4. Sitzanzeigesystem nach einem der Ansprüche 1 bis 3, **dadurch gekennzeichnet, dass** die Bildwandlereinheit (14) einen Bildwandler aufweist, der dazu vorgesehen ist, ein Eingangssignal der Videosignalübertragungseinheit (20) zu einem Ausgangssignal zu wandeln, welches spezifisch auf die Sitzbildschirmeinheit (12) abgestimmt ist.

5. Sitz, insbesondere Flugzeugsitz, mit einem Sitzanzeigesystem nach einem der Ansprüche 1 - 4.

6. Verfahren zum Austausch einer Rückeniehneneinheit (10) eines Sitzes nach Anspruch 5, das folgende Schritte umfasst:
- Trennen eines lösbaren Verbindungselements (22) zwischen einer Videosignalübertragungseinheit (20) und einer Bildwandlereinheit (14)
- Abnehmen der Rückenlehneneinheft (10) von der Sitzvorrichtung.

## Claims

1. Seat display system with a seat apparatus having a backrest unit (10) which has at least one seat screen unit (12) provided to display output signals from an image converter unit (14) in a ready-to-operate state, the output signals being transmitted by a signal transmission unit (18) between the image converter unit (14) and the seat screen unit (12), and having at least one output interface (36) provided to transmit signals between the image converter unit (14) and the seat screen unit (12), and with the image converter unit (14), which is provided to generate output signals to be displayed by the seat screen unit (12) and which is arranged outside the seat screen unit (12), and with the signal transmission unit (18), which is provided to transmit the signals which are generated by the image converter unit (14) to the seat screen unit (12),
**characterized in that** the image converter unit (14) has at least one voltage converter which is provided for the purpose of generating at least a supply voltage for the seat screen unit (12).

2. Seat display system according to Claim 1,
**characterized in that** the signal transmission unit (18) comprises at least one electrical conductor track which is integrated in the seat apparatus.

3. Seat display system according to Claim 1 or 2,
**characterized by** a releasable connection element (22) which, in a ready-to-operate state, is arranged between the image converter unit (14) and a video signal transmission unit (20).

4. Seat display system according to one of Claims 1 to 3, **characterized in that** the image converter unit (14) has an image converter which is provided for the purpose of converting an input signal of the video signal transmission unit (20) into an output signal which is specifically adapted to the seat screen unit (12).

5. Seat, in particular an aircraft seat, having a seat display system according to one of Claims 1-4.

6. Method for replacing a backrest unit (10) of a seat according to Claim 5, which method comprises the following steps:
- disconnecting a releasable connection element (22) between a video signal transmission unit (20) and an image converter unit (14), and
- removing the backrest unit (10) from the seat apparatus.

## Revendications

1. Système d'affichage de siège avec un dispositif de siège pourvu d'une unité de dossier (10) comportant au moins une unité d'écran de siège (12) prévue pour afficher dans un état opérationnel des signaux de sortie d'une unité de conversion d'image (14), les signaux de sortie étant transmis par une unité de transmission de signal (18) entre l'unité de conversion d'image (14) et l'unité d'écran de siège (12), et comportant au moins une interface de sortie (36) prévue pour transmettre des signaux entre l'unité de conversion d'image (14) et l'unité d'écran de siège (12), et avec l'unité de conversion d'image (14) prévue pour générer des signaux de sortie à afficher moyennant de l'unité d'écran de siège (12) et disposée à l'extérieur de l'unité d'écran de siège (12), et avec l'unité de transmission de signal (18) prévue pour transmettre les signaux générés par l'unité de conversion d'image (14) à l'unité d'écran de siège (12), **caractérisé en ce que** l'unité de conversion d'image (14) comporte au moins un convertisseur de voltage prévu pour produire au moins une voltage d'alimentation adaptée pour l'unité d'écran de siège (12).

2. Système d'affichage de siège selon la revendication 1, **caractérisé en ce que** l'unité de transmission de signal (18) comprend au moins une piste conductrice électrique intégrée dans le dispositif de siège.

3. Système d'affichage de siège selon la revendication 1 ou 2, **caractérisé par** un élément de liaison (22) amovible disposé dans un état opérationnel entre l'unité de conversion d'image (14) et une unité de transmission de signal vidéo (20).

4. Système d'affichage de siège selon l'une quelconque des revendications 1 à 3, **caractérisé en ce que** l'unité de conversion d'image (14) comporte un convertisseur d'image prévu pour convertir un signal d'entrée de l'unité de transmission de signal vidéo (20) en un signal de sortie spécifiquement adapté à l'unité d'écran de siège (12).

5. Siège, notamment siège d'avion, avec un système d'affichage de siège selon l'une quelconque des revendications 1 à 4.

6. Procédé pour échanger une unité de dossier (10) d'un siège selon la revendication 5, comprenant les étapes suivantes :
- séparation d'un élément de liaison (22) amovible entre une unité de transmission de signal vidéo (20) et une unité de conversion d'image (14) ;
- enlèvement de l'unité de dossier (10) hors du dispositif de siège.
